# EUROPÄISCHE PATENTSCHRIFT

(11) **EP 1 224 777 B1**
(45) Veröffentlichungstag und Bekanntmachung des Hinweises auf die Patenterteilung: **06.09.2006**
(21) Anmeldenummer: 00983041.5
(22) Anmeldetag: 19.10.2000
(51) Int. Cl.: H04L 12/56

(54) **VERFAHREN ZUM VERBESSERN DER DATENÜBERTRAGUNGSQUALITÄT IN DATENPAKETORIENTIERTEN KOMMUNIKATIONSNETZEN**
METHOD FOR IMPROVING DATA TRANSFER QUALITY IN DATA PACKET ORIENTED COMMUNICATION NETWORKS
PROCEDE POUR AMELIORER LA QUALITE DE TRANSMISSION DE DONNEES DANS DES RESEAUX DE COMMUNICATION A COMMUTATION PAR PAQUETS DE DONNEES

(30) Priorität: 28.10.1999 DE 19952048
(43) Veröffentlichungstag der Anmeldung: 24.07.2002
(73) Patentinhaber: SIEMENS AKTIENGESELLSCHAFT, 80333 München (DE)
(72) Erfinder: WINDECKER, Rainer, 81739 München (DE)
(86) Internationale Anmeldenummer: PCT/DE2000/003680
(87) Internationale Veröffentlichungsnummer: WO 2001/031858

(56) Entgegenhaltungen:
- EP-A- 0 800 294
- JAIN R: "Congestion control and traffic management in ATM networks: Recent advances and a survey" COMPUTER NETWORKS AND ISDN SYSTEMS,NL,NORTH HOLLAND PUBLISHING. AMSTERDAM, Bd. 28, Nr. 13, 1. Oktober 1996 (1996-10-01), Seiten 1723-1738, XP004013568 ISSN: 0169-7552

## Beschreibung

Die Erfindung betrifft ein Verfahren zum Verbessern der Datenübertragungsqualität in datenpaketorientierten Kommunikationsnetzen gemäß dem Oberbegriff des Patentanspruchs 1.

In datenpaketorientierten Kommunikationsnetzen werden zu übermittelnde Datenströme in einzelne Datenpakete aufgeteilt, die mit einer Zieladresse versehen, über Netzknoten des Kommunikationsnetzes zum jeweiligen Übertragungsziel übermittelt werden. Die Übermittlung erfolgt dabei üblicherweise im Rahmen verschiedener Schichten von Übertragungsprotokollen, wie z.B. dem IP-Protokoll (internet protocol) als Schicht-Drei-Protokoll und dem sog. TCP-Protokoll (transmission control protocol) oder dem sog. UDP-Protokoll (user datagram protocol) als Schicht-Vier-Protokolle. Die vorstehende Numerierung der Protokollschichten bezieht sich auf das sog. OSI-Referenzmodell.

Häufig wird zur Übermittlung von Datenpaketen ein Übertragungsprotokoll, wie z.B. das IP-Protokoll, eingesetzt, das eine korrekte Übermittlung nicht für jedes einzelne Datenpaket garantiert. Im Rahmen eines derartigen Übertragungsprotokolls werden bei einem Netzknoten oder einer Übertragungsstrecke auftretende Überlastsituationen dadurch bewältigt, daß die Überlastsituation auslösende. Datenpakete verworfen und damit nicht weiter übermittelt werden, siehe z.B. auch ein ATM Übertragungsverfahren, das aus der Druckschrift: JAIN R, "Congestion control and traffc management in ATM networks: Recent advances and a survey" COMPUTER NETWORKS AND ISDN SYSTEMS, NL, NORTH HOLLAND PUBLISHING. AMSTERDAM, Bd. 28, Nr. 13, 1. Oktober 1996 (1996-10-01), bekannt ist. Datenpakete, die deshalb nicht beim Übermittlungsziel ankommen, werden üblicherweise im Rahmen eines übergeordneten Übertragungsprotokolls, wie z.B. dem TCP-Protokoll, durch das Übermittlungsziel erneut vom Sender der Datenpakete angefordert. Eine derartige Sicherung der Datenübertragung ist jedoch für Echtzeitanwendungen nicht geeignet, da eine notwendige Neuanforderung eines Datenpakets eine lückenlose Rekonstruktion des Datenstroms der Übermittlungsdaten beim Empfänger stark verzögert.

Bei einer Übertragung von Echtzeitdaten, wie z.B. Sprach- oder Videodaten, über ein paketorientiertes Kommunikationsnetz wird zur Verringerung einer überlastungsbedingten Datenpaketverlustrate häufig die Datenrate der Echtzeitdaten gesenkt, um dadurch die Überlastung zu reduzieren. Dies erfolgt häufig durch Anwendung von Datenkomprimierungsverfahren. Eine Komprimierung von Echtzeitdaten verbessert deren Übertragungsqualität bei einer Überlastsituation jedoch nur dann, wenn die Überlastsituation auch vorwiegend durch eine Übertragung von Echtzeitdaten hervorgerufen wird. Falls die Überlastsituation hauptsächlich durch Übertragung anderer Daten verursacht wird, bewirkt die Komprimierung der Echtzeitdaten im wesentlichen nur, daß die anderen Daten schneller übertragen werden können. Zudem bleibt bei einer Komprimierung von Echtzeitdaten und insbesondere von Sprach- oder Videodaten häufig der Informationsgehalt der Echtzeitdaten nicht vollständig erhalten, wodurch sich insbesondere bei Sprach- oder Videodaten die Signalqualität verschlechtert. Weiterhin werden Echtzeitdaten durch ihre Komprimierung insbesondere bei Übertragung über datenpaketorientierte Kommunikationsnetze stärker verzögert, da ein Auffüllen einzelner Datenpakete mit komprimierten Echtzeitdaten entsprechend länger dauert.

Es ist Aufgabe der vorliegenden Erfindung, ein Verfahren zum Verbessern der Übertragungsqualität von über ein datenpaketorientiertes Kommunikationsnetz zu übertragenden Daten anzugeben, mit dem die vorgenannten Nachteile vermieden werden können.

Gelöst wird diese Aufgabe durch ein Verfahren mit den Merkmalen des Patentanspruchs 1.

Durch das erfindungsgemäße Verfahren kann die Übertragungsqualität eines von einem Sender über einen Netzknoten eines datenpaketorientierten Kommunikationsnetzes zu einem Sender zu übertragenden Datenstroms wesentlich verbessert werden. Dies gilt insbesondere für eine datenpaketorientierte Übermittlung von Echtzeitdaten, wie z.B. Sprach- und/oder Videodaten - im Fachjargon auch als "Voice over IP" (VoIP) bzw. "Video over IP" bezeichnet. Das erfindungsgemäße Verfahren läßt sich auf eine Vielzahl von Kommunikationsnetzen, wie z.B. sog. Lokale Netze (LAN) und Weitverkehrsnetze (WAN), mit unterschiedlichen Übertragungsprotokollen, wie z.B. dem Internet-Protokoll (IP) anwenden, ohne daß Eingriffe in die bestehende Struktur der Kommunikationsnetze erforderlich wären. Der übertragende Netzknoten kann dabei z.B. eine auch als L2-Switch bezeichnete Brücke, ein auch als L3-Switch bezeichneter Router, ein sog. Gateway oder eine andere datenpaketvermittelnde Einrichtung des Kommunikationsnetzes sein.

Üblicherweise werden durch einen solchen Netzknoten Datenpakete verworfen, wenn die Datenrate zu übertragender Datenströme die Übertragungskapazität des Netzknotens oder dessen Übertragungsleitungen übersteigt. Meist werden in einem solchen Überlastungsfall Datenpakete aus allen zur Überlastung beitragenden Datenströmen anteilig verworfen. So kann beispielsweise, falls das Aufkommen zu übertragender Daten die Übertragungskapazität eines Netzknotens um das Doppelte übersteigt, jedes zweite Datenpaket aller zur Überlastung beitragenden Datenströme durch den Netzknoten verworfen werden.

Gemäß dem erfindungsgemäßen Verfahren wird zur Verbesserung der Übertragungsqualität eines ersten Datenstroms, der mit mindestens einem weiteren über den Netzknoten zu übertragenden Datenstrom in Konkurrenz um eine begrenzte Übertragungskapazität des Netzknotens oder einer seiner Übertragungsleitungen steht, die Datenrate des ersten Datenstroms durch Hinzufügen von Redundanzdaten durch den Sender erhöht. Während einer Überlastsituation wird durch die Erhöhung der Datenrate des ersten Datenstroms gegenüber der Datenrate des mindestens einen weiteren Datenstroms letzterer insofern verdrängt, als daß auf den ersten Datenstrom ein größerer Anteil an der gemeinsam verfügbaren Übertragungskapazität entfällt. Nach Erhöhung der Datenrate des ersten Datenstroms erreichen bei gleichbleibendem oder geringfügig steigendem Anteil an verworfenen Datenpaketen eine größere Anzahl von nicht verworfenen Datenpaketen des ersten Datenstroms den Empfänger als vor der Erhöhung. Damit kann der ursprüngliche Informationsinhalt des ersten Datenstroms durch den Empfänger besser rekonstruiert werden, wodurch sich die Übertragungsqualität verbessert.

Das erfindungsgemäße Verfahren läßt sich besonders vorteilhaft auf eine Übertragung von Echtzeit- oder Quasi-Echtzeitdaten vorgegebener Datenrate anwenden, da keine zusätzliche Verzögerung der zu übertragenden Daten notwendigerweise auftritt. Besonders vorteilhaft läßt sich das Verfahren in Lokalen Netzen einsetzen, in denen durch eine Erhöhung der Datenrate eines zu übertragenden Datenstroms keine Gebühren verursacht werden.

Mittels des erfindungsgemäßen Verfahrens kann einem über einen Netzknoten zu übertragenden Datenstrom auf einfache Weise ein höherer Anteil an der Übertragungskapazität des Netzknotens verschafft werden. Besonders vorteilhaft ist in diesem Zusammenhang, daß dazu kein Eingriff in bestehende Kommunikationsnetze oder Netzknoten erforderlich ist.

Vorteilhafte Ausführungsformen und Weiterbildungen der Erfindung sind in den abhängigen Ansprüchen angegeben.

Die Redundanz des ersten Datenstroms kann auf vielerlei Weise erhöht werden. So z.B. durch Hinzufügen von Paritätsinformationen, Prüfsummen und/oder Redundanzdaten gemäß dem sog. CRC-Verfahren (cyclic redundancy check). Gemäß einer besonders einfachen Ausführungsvriante kann die Erhöhung der Datenrate durch Vervielfältigung der Datenpakete beim Sender erfolgen. Ein Vorteil dieser Ausführungsvariante ist, daß zur Durchführung des erfindungsgemäßen Verfahrens in der Regel auch keine Veränderungen am Empfänger notwendig sind, da die üblicherweise verwendeten Datenpaket-Übertragungsprotokolle meist eine korrekte Behandlung von mehrfach eintreffenden Datenpaketen vorsehen. Außer durch eine Erhöhung der Datenpaketrate kann die Datenrate des ersten Datenstroms auch durch eine Verlängerung von dessen Datenpaketen erfolgen. Dies ist insbesondere dann vorteilhaft, wenn die Übertragungskapazität weniger durch die Datenrate als vielmehr durch die Datenpaketrate beim Netzknoten eingeschränkt wird.

Gemäß einer vorteilhaften Weiterbildung der Erfindung kann durch den Empfänger ein Maß für die Übertragungsqualität des ersten Datenstroms ermittelt werden. Ein solches Maß stellt z.B. der Anteil nicht empfangener Datenpakete des ersten Datenstroms dar. Dieser Anteil kann z.B. anhand einer vorzugsweise im Rahmen des sog. RTP-Protokolls (real time transport protocol) erfolgten Numerierung der Datenpakete des ursprünglichen ersten Datenstroms bestimmt werden. Abhängig vom ermittelten Maß für die Übertragungsqualität kann daraufhin eine Rückmeldung, vorzugsweise im Rahmen des sog. RTCP-Protokolls (real time control protocol), vom Empfänger zum Sender übermittelt werden. Die Rückmeldung kann z.B. immer dann erfolgen, wenn die Ubertragungsqualität eine vorgegebene Grenze unterschreitet.

Eine derartige Überwachung und Rückmeldung der Übertragungsqualität ist im RTCP-Protokoll bereits standardmäßig vorgesehen, so daß eine Vielzahl bestehender Kommunikationseinrichtungen mit implementiertem RTCP-Protokoll unverändert als Empfänger im Sinne des erfindungsgemäßen Verfahrens verwendet werden können. Der Sender kann durch eine von ihm empfangene Rückmeldung dazu veranlaßt werden, abhängig von dieser Redundanzdaten zum ersten Datenstrom hinzuzufügen. Beispielsweise kann nach Empfang einer Rückmeldung, die angibt, daß nur jedes zweite Datenpaket des ersten Datenstroms beim Empfänger ankommt, die Datenrate des ersten Datenstroms durch Hinzufügen einer entsprechenden Menge von Redundanzdaten vom Sender verdoppelt werden. Die Rückmeldung kann weiterhin auch eine vom Empfänger vorgegebene Information über die Art und Menge von Redundanzdaten enthalten, die dem ersten Datenstrom vom Sender hinzuzufügen sind.

Nach einer weiteren vorteilhaften Weiterbildung der Erfindung kann der Sender eine Information über die Redundanzdaten, die von ihm zum ersten Datenstrom hinzugefügt werden, zum Empfänger übermitteln. Durch die Information kann beispielsweise die Art und Menge der hinzugefügten Redundanzdaten angegeben werden. Eine Rekonstruktion des Informationsinhalts des ersten Datenstroms aus den vom Empfänger empfangenen Datenpaketen kann dann abhängig von der übermittelten Information erfolgen. Beispielsweise kann anhand der empfangenen Information über die Redundanzdaten ein auf die Art der Redundanzdaten abgestimmtes Rekonstruktionsverfahren (z.B. das CRC-Verfahren) ausgewählt werden.

Ein Ausführungsbeispiel der Erfindung wird nachfolgend anhand der Zeichnung näher erläutert.

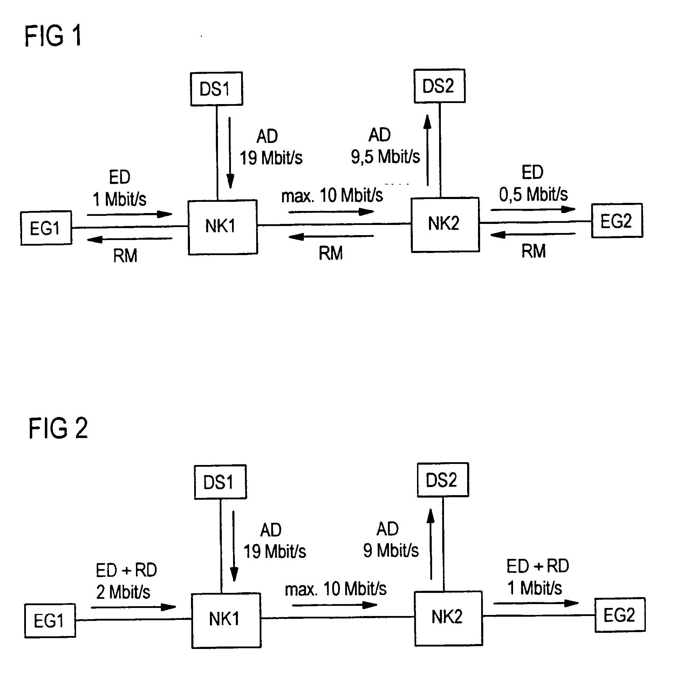

Dabei zeigen, jeweils in schematischer Darstellung
- FIG 1 und FIG 2: ein Kommunikationssystem beim Übertragen von Echtzeitdaten und Allgemeindaten in verschiedenen Übertragungsmoden.

In FIG 1 und FIG 2 ist jeweils dasselbe Kommunikationssystem mit zwei Endgeräten EG 1 und EG2 zur Echtzeitkommunikation, z.B. zwei Videotelefonen, zwei Datenservern DS1 und DS2, sowie zwei miteinander direkt oder indirekt gekoppelten Netzknoten NK1 und NK2 eines datenpaketorientierten Kommunikationsnetzes schematisch dargestellt. Das Kommunikationsnetz kann dabei z.B. als Lokales Netz (LAN) realisiert sein, dessen LAN-Subnetze durch die als Router realisierten Netzknoten NK1 und NK2 verbunden sind. Im vorliegenden Ausführungsbeispiel ist die maximale Übertragungskapazität für Datenübertragungen vom Netzknoten NK1 zum Netzknoten NK2 auf 10 MBit/s beschränkt.

Das Endgerät EG1 und der Datenserver DS1 sind an den Netzknoten NK1 und das Endgerät EG2 und der Datenserver DS2 an den Netzknoten NK2 gekoppelt. Über die Netzknoten NK1 und NK2 ist eine Datenverbindung zwischen den Datenserver DS1 und dem Datenserver DS2 sowie eine Echtzeit-Kommunikationsverbindung zwischen dem Endgerät EG1 und dem Endgerät EG2 aufgebaut. Während im Rahmen der Datenverbindung Allgemeindaten AD mit einer Datenrate von 19 MBit/s vom Datenserver DS1 gesendet werden, sind im Rahmen der Echtzeit-Kommunikationsverbindung Echtzeitdaten ED, z.B. Sprach- und/oder Videodaten, mit einer durch die Echtzeiterfordernisse vorgegebenen Datenrate von 1 MBit/s zu übertragen. Sowohl die Echtzeitdaten ED als auch die Allgemeindaten AD werden innerhalb von mit einer jeweiligen Zieladresse versehenen Datenpaketen übertragen.

FIG 1 veranschaulicht einen ersten Übertragungsmodus, bei dem die Echtzeitdaten ED als ein erster Datenstrom mit einer Datenrate von 1 MBit/s zum Netzknoten NK1 gesendet werden. Parallel dazu werden die Allgemeindaten AD als ein zweiter Datenstrom mit einer Datenrate von 19 MBit/s vom Datenserver DS1 ebenfalls zum Netzknoten NK1 übertragen. Da die maximal verfügbare Übertragungskapazität für Datenübertragungen vom Netzknoten NK1 zum Netzknoten NK2 nur 10 MBit/s beträgt, die Summe der Datenraten der zu übertragenden Datenströme jedoch 20 MBit/s ergibt, wird durch den Netzknoten NK1 nur jedes zweite ankommende Datenpaket zum Netzknoten NK2 weitergeleitet. Die restlichen Datenpakete werden verworfen. Für das vorliegende Ausführungsbeispiel sei angenommen, daß der Netzknoten NK1 die zu übertragenden Datenströme gleichberechtigt behandelt, d.h. bei jedem zu übertragenden Datenstrom annähernd den gleichen Anteil an Datenpaketen verwirft. Dies bedeutet, daß von den Echtzeitdaten ED und den Allgemeindaten AD nur jeweils ca. die Hälfte der Datenpakete über den Netzknoten NK2 zum jeweiligen Übertragungsziel EG2 bzw. DS2 ausgeliefert wird. Beim Datenserver DS2 trifft somit ein fragmentierter Strom von Allgemeindaten AD mit einer Datenrate von ca. 9,5 MBit/s und beim Endgerät EG2 ein fragmentierter Strom von Echtzeitdaten mit einer Datenrate von ca. 0,5 MBit/s ein. Während der Datenserver DS2 die verworfenen Datenpakete der Allgemeindaten AD im Rahmen eines übergeordneten Übertragunsprotokolls, wie z.B. des TCP-Protokolls, erneut vom Datenserver DS1 anfordern kann, würde ein Neuanfordern von verworfenen Datenpaketen der Echtzeitdaten ED in der Regel zu einer nicht tolerierbaren Verzögerung führen. Sofern als Echzeitdaten ED Sprachdaten übertragen werden, bleibt ein übertragener Sprachinhalt zwar in der Regel auch bei Verlust der Hälfte der zu übertragenden Sprachdaten aufgrund einer Sprachdaten eigentümlichen Redundanz verständlich, doch verschlechtert sich die Übertragungsqualität des Sprachinhaltes beträchtlich.

Durch das Endgerät EG2 wird die Übertragungsqualität des empfangenen Datenstroms von Echtzeitdaten ED überwacht, indem regelmäßig der Anteil nicht empfangener Datenpakete bestimmt wird. Dieser Anteil kann vorzugsweise im Rahmen des RTC-Protokolls anhand einer Numerierung der Datenpakete des vom Endgerät EG1 gesendeten, ersten Datenstroms ermittelt werden. Das Endgerät EG2 sendet daraufhin abhängig von der ermittelten Übertragungsqualität eine Rückmeldung RM vorzugsweise gemäß dem RTCP-Protokoll über den Netzknoten NK2 und NK1 zum Endgerät EG1 zurück. Die Rückmeldung RM enthält im vorliegenden Ausführungsbeispiel die Information, daß nur die Hälfte aller Datenpakete der Echtzeitdaten ED vom Endgerät EG2 empfangen wurden. Eine solche die Übertragungsqualität von empfangenen Echtzeitdaten betreffende Rückmeldung ist bei einer Vielzahl von Endgeräten, die im Zusammenhang mit datenpaketorientierter Sprachübertragung (VoIP: voice over IP) verwendet werden, bereits üblich.

Nach Empfang der Rückmeldung RM und deren Auswertung wechselt das Endgerät EG1 in einen zweiten Übertragungsmodus, der in FIG 2 veranschaulicht wird. Das Endgerät EG1 fügt hierbei dem Datenstrom der Echtzeitdaten ED zusätzliche Redundanzdaten RD zur Erhöhung der Redundanz dieses Datenstroms hinzu, so daß sich dessen Datenrate erhöht. Der Faktor, um den die Datenrate erhöht wird, orientiert sich dabei an dem in der Rückmeldung angegebenen Anteil der vom Endgerät EG2 empfangenen Datenpakete. Im vorliegenden Ausführungsbeispiel wird somit die Datenrate des ersten Datenstroms durch das Hinzufügen der Redundanzdaten RD auf 2 MBit/s verdoppelt. Als Redundanzdaten RD können beispielsweise Zusatzinformationen gemäß dem CRC-Verfahren hinzugefügt werden. Vorzugsweise kann ein jeweiliger Dateninhalt einzelner Datenpakete mit Echtzeitdaten ED zusammen mit den Redundanzdaten RD über mehrere Datenpakete des ersten Datenstroms verteilt werden. Nach einer besonders einfachen Variante kann auch jedes einzelne Datenpaket der Echtzeitdaten ED vom Endgerät EG1 verdoppelt und somit zweimal zum Netzknoten NK1 übertragen werden.

Die Summe der Datenraten der zum Netzknoten NK1 übertragenen Datenströme beträgt nunmehr 21 MBit/s und überschreitet somit die maximale Übertragungskapazität der Übertragungsstrecke zwischen den Netzknoten NK1 und NK2 um das 2,1 fache. Da durch den Netzknoten NK1 somit im zeitlichen Mittel nur 10 von 21 Datenpaketen weitergeleitet werden, trifft beim Datenserver DS2 ein Datenstrom fragmentierter Allgemeindaten AD mit einer Datenrate von ca. 9 MBit/s und beim Endgerät EG2 ein fragmentierter, aus den Echtzeitdaten ED und den Redundanzdaten RD bestehender Datenstrom mit einer Datenrate von ca. 1 MBit/s ein. Während sich die Datenrate empfangener Allgemeindaten AD beim Datenserver DS2 nur leicht verringert, steigt die Datenrate der vom Endgerät EG2 empfangenen Daten ca. auf das Doppelte. Da die Datenrate des fragmentiert übertragenen Datenstroms aus Echtzeitdaten und Redundanzdaten in etwa der Datenrate der ursprünglich zu übertragenden Echtzeitdaten ED entspricht, können diese vom Endgerät EG2 anhand der übertragenen Redundanzdaten RD weitgehend rekonstruiert werden. Die Übertragungsqualität der Echtzeitdaten ED erhöht sich dadurch beträchtlich.

Das erfindungsgemäße Verfahren erlaubt es somit, auf einfache Weise und ohne daß Änderungen an bestehenden Kommunikationsnetzen oder deren Netzknoten erforderlich wären, mit der Übertragungsqualität einen sog. Quality-of-Service-Parameter (QoS) einer datenpaketorientierten Verbindung zu regulieren. Da im allgemeinen davon ausgegangen wird, daß das Übertragungsvolumen von Nicht-Echtzeitdaten gegenüber dem Übertragungsvolumen von Echtzeitdaten zukünftig stark ansteigen wird, ist eine durch das erfindungsgemäße Verfahren bedingte Erhöhung der Datenrate bei Echtzeitübertragungen aller Voraussicht nach tolerierbar oder sogar vernachlässigbar.

Falls vom Endgerät EG2 festgestellt wird, daß sich die Übertragungsqualität des empfangenen Datenstroms verbessert, d.h. daß ein geringerer Anteil an Datenpaketen verworfen wird, kann vom Endgerät EG2 eine weitere Rückmeldung zum Endgerät EG1 übertragen werden, um dort eine Verringerung der Datenrate durch Verringerung des Anteils von hinzugefügten Redundanzdaten zu veranlassen.

Weiterhin kann vom Endgerät EG2 überprüft werden, ob sich durch eine erfolgte Erhöhung der Datenrate des vom Endgerät EG1 übertragenen Datenstroms die Übertragungsqualität für die Echtzeitdaten ED effektiv verbessert. Falls keine vorgegebene Verbesserung eintritt, kann eine weitere Rückmeldung zum Endgerät EG1 übermittelt werden, um dadurch das Endgerät EG1 dazu zu veranlassen, die Erhöhung der Datenrate wieder rückgängig zu machen. Auf diese Weise wird das Kommunikationsnetz entlastet.

## Patentansprüche

1. Verfahren zum Verbessern der Übertragungsqualität eines von einem Sender (EG1) über einen Netzknoten (NK1) eines datenpaketorientierten Kommunikationsnetzes zu einem Empfänger (EG2) zu übertragenden, ersten Datenstroms (ED) vorgegebener Datenrate, der vom Netzknoten (NK1) gemeinsam mit mindestens einem weiteren Datenstrom (AD) weiterzuleiten ist, wobei bei Überschreiten einer für die Datenströme (ED, AD) gemeinsam verfügbaren Übertragungskapazität Datenpakete der zu übertragenden Datenströme (ED, AD) durch den Netzknoten (NK1) verworfen werden,
**dadurch gekennzeichnet,**
**daß** während einer Überlastsituation die Datenrate des ersten Datenstroms (ED) durch den Sender (EG1) durch Hinzufügen von redundanzerhöhenden Redundanzdaten (RD) erhöht wird, wodurch der mindestens eine weitere Datenstrom (AD) insofern verdrängt wird, als ein größerer Anteil an der gemeinsam verfügbaren Übertragungskapazität auf den ersten Datenstrom entfällt.

2. Verfahren nach Anspruch 1,
**dadurch gekennzeichnet,**
**daß** zur zusätzlichen Übertragung der Redundanzdaten (RD) eine Datenpaketrate des ersten Datenstroms (ED) vom Sender (EG1) erhöht wird.

3. Verfahren nach Anspruch 2,
**dadurch gekennzeichnet,**
**daß** als Redundanzdaten (RD) Kopien von Datenpaketen des ersten Datenstroms (ED) vom Sender (EG1) erstellt und zum Netzknoten (NK1) übertragen werden.

4. Verfahren nach einem der vorhergehenden Ansprüche,
**dadurch gekennzeichnet,**
**daß** zur zusätzlichen Übertragung der Redundanzdaten (RD) die Länge von Datenpaketen des ersten Datenstroms (ED) vom Sender (EG1) erhöht wird.

5. Verfahren nach einem der vorhergehenden Ansprüche,
**dadurch gekennzeichnet,**
**daß** durch den Sender (EG1) der Dateninhalt eines zu übertragenden Datenpaketes des ersten Datenstroms (ED) zusammen mit Redundanzdaten (RD) über mehrere Datenpakete verteilt wird, die vom Sender (EG1) zum Netzknoten (NK1) übermittelt werden.

6. Verfahren nach einem der vorhergehenden Ansprüche,
**dadurch gekennzeichnet,**
**daß** vom Empfänger (EG1) anhand des empfangenen, ersten Datenstroms (ED, ED+RD) ein Maß für dessen Übertragungsqualität ermittelt wird,
abhängig vom ermittelten Maß für die Übertragungsqualität eine Rückmeldung (RM) vom Empfänger (EG2) zum Sender (EG1) übermittelt wird, und
vom Sender (EG1) abhängig von der empfangenen Rückmeldung (RM) Redundanzdaten (RD) zum ersten Datenstrom (ED) hinzugefügt werden.

7. Verfahren nach Anspruch 6,
**dadurch gekennzeichnet,**
**daß** die Datenrate der hinzugefügten Redundanzdaten (RD) vom Sender (EG1) verringert wird, falls keine vorgegebene Verbesserung der Übertragungsqualität festgestellt wird.

8. Verfahren nach einem der vorhergehenden Ansprüche,
**dadurch gekennzeichnet,**
**daß** vom Sender (EG1) Redundanzdaten (RD) auf Anforderung des Empfängers (EG2) zum ersten Datenstrom (ED) hinzugefügt werden.

9. Verfahren nach einem der vorhergehenden Ansprüche,
**dadurch gekennzeichnet, daß** vom Sender (EG1) eine Information über die Redundanzdaten (RD) zum Empfänger (EG2) übermittelt wird, und
daß durch den Empfänger (EG2) ein Informationsinhalt des ersten Datenstroms (ED) aus den vom Empfänger (EG2) empfangenen Datenpaketen des ersten Datenstroms (ED) abhängig von der übermittelten Information, zumindest teilweise, rekonstruiert wird.

10. Verfahren nach einem der vorhergehenden Ansprüche,
**dadurch gekennzeichnet,**
**daß** innerhalb des ersten Datenstroms Quasi-Echtzeitdaten (ED) übermittelt werden.

## Claims

1. Method for improving the transmission quality of a first data stream (ED), which is to be transmitted from a transmitter (EG1) via a network node (NK1) in a data packet oriented communication network to a receiver (EG2), has a predetermined data rate, and is to be passed on from the network node (NK1) together with at least one further data stream (AD) in which case, if the transmission capacity which is jointly available for the data streams (ED, AD) is exceeded, data packets in the data streams (ED, AD) to be transmitted are rejected by the network node (NK1),
**characterized**
**in that**, during an overload situation, the transmitter (EG1) increases the data rate of the first data stream (ED) by adding redundancy-increasing redundant data (RD), as a result of which at least one further data stream (AD) is overriden to the extent that a greater proportion of the jointly available transmission capacity is taken up by the first data stream (ED+RD).

2. Method according to Claim 1,
**characterized**
**in that** a data packet rate for the first data stream (ED) is increased by the transmitter (EG1) for additional transmission of the redundant data (RD).

3. Method according to Claim 2,
**characterized**
**in that** copies of data packets in the first data stream (ED) are produced by the transmitter (EG1) as redundant data (RD), and are transmitted to the network node (NK1).

4. Method according to one of the preceding claims,
**characterized**
**in that** the length of data packets in the first data stream (ED) is increased by the transmitter (EG1) for additional transmission of the redundant data (RD).

5. Method according to one of the preceding claims,
**characterized**
**in that** the transmitter (EG1) distributes the data contents of a data packet which is to be transmitted in the first data stream (ED), together with redundant data (RD), over a number of data packets, which are transmitted from the transmitter (EG1) to the network node (NK1).

6. Method according to one of the preceding claims,
**characterized**
**in that** the receiver (EG1) uses the received, first data stream (ED, ED+RD) to determine a measure for its transmission quality,
the receiver (EG2) transmits an acknowledgement (RM) to the transmitter (EG1) depending on the determined measure for the transmission quality, and
the transmitter (EG1) adds redundant data (RD) to the first data stream (ED) depending on the received acknowledgement (RM).

7. Method according to Claim 6,
**characterized**
**in that** the data rate of the added redundant data (RD) is reduced by the transmitter (EG1) if no predetermined improvement in the transmission quality is found.

8. Method according to one of the preceding claims,
**characterized**
**in that** the transmitter (EG1) adds redundant data (RD) to the first data stream (ED) on request by the receiver (EG2).

9. Method according to one of the preceding claims,
**characterized**
**in that** the transmitter (EG1) transmits information about the redundant data (RD) to the receiver (EG2), and
**in that** the receiver (EG2) at least partially reconstructs the information content of the first data stream (ED) from the data packets received by the receiver (EG2) in the first data stream (ED), depending on the transmitted information.

10. Method according to one of the preceding claims,
**characterized**
**in that** quasi real time data (ED) is transmitted within the first data stream.

## Revendications

1. Procédé pour améliorer la qualité de transmission d'un premier flux de données (ED) d'un débit de données prédéfini à transmettre par un émetteur (EG1) à un récepteur (EG2) via un noeud de réseau (NK1) d'un réseau de communication à commutation par paquets de données, le flux de données devant être transmis par le noeud de réseau (NK1) en commun avec au moins un flux de données supplémentaire (AD), des paquets de données des flux de données à transmettre (ED, AD) étant rejetés par le noeud de réseau (NK1) en cas de dépassement d'une capacité de transmission disponible en commun pour les flux de données (ED, AD),
**caractérisé en ce**
**que**, pendant une situation de surcharge, le débit de données du premier flux de données (ED) est augmenté par l'émetteur (EG1) par ajout de données de redondance (RD) augmentant la redondance, ce qui a pour conséquence que l'au moins un flux de données supplémentaire (AD) est écarté dans la mesure où une fraction plus grande de la capacité de transmission disponible en commun est attribuée au premier flux de données.

2. Procédé selon la revendication 1,
**caractérisé en ce**
**qu'**un débit de paquets de données du premier flux de données (ED) est augmenté par l'émetteur (EG1) pour la transmission supplémentaire des données de redondance (RD).

3. Procédé selon la revendication 2,
**caractérisé en ce**
**que** des copies de paquets de données du premier flux de données (ED) sont créées par l'émetteur (EG1) comme données de redondance (RD) et sont transmises au noeud de réseau (NK1).

4. Procédé selon l'une quelconque des revendications précédentes,
**caractérisé en ce**
**que** la longueur de paquets de données du premier flux de données (ED) est augmentée par l'émetteur (EG1) pour la transmission supplémentaire des données de redondance (RD).

5. Procédé selon l'une quelconque des revendications précédentes,
**caractérisé en ce**
**que** le contenu des données d'un paquet de données à transmettre du premier flux de données (ED) est réparti par l'émetteur (EG1), avec des données de redondance (RD), sur plusieurs paquets de données qui sont transmis par l'émetteur (EG1) au noeud de réseau (NK1).

6. Procédé selon l'une quelconque des revendications précédentes,
**caractérisé en ce que**
une mesure pour la qualité de transmission du premier flux de données reçu (ED, ED+RD) est déterminée par le récepteur (EG2) à l'aide du premier flux de données reçu,
une information en retour (RM) est transmise par le récepteur (EG2) à l'émetteur (EG1) en fonction de la mesure déterminée pour la qualité de transmission, et
des données de redondance (RD) sont ajoutées au premier flux de données (ED) par l'émetteur (EG1) en fonction de l'information en retour reçue (RM).

7. Procédé selon la revendication 6,
**caractérisé en ce**
**que** le débit de données des données de redondance ajoutées (RD) est diminué par l'émetteur (EG1) au cas où aucune amélioration prédéfinie de la qualité de transmission n'est constatée.

8. Procédé selon l'une quelconque des revendications précédentes,
**caractérisé en ce**
**que** des données de redondance (RD) sont ajoutées par l'émetteur (EG1) au premier flux de données (ED) sur demande du récepteur (EG2).

9. Procédé selon l'une quelconque des revendications précédentes,
**caractérisé en ce**
**qu'**une information concernant les données de redondance (RD) est transmise au récepteur (EG2) par l'émetteur (EG1), et
en ce qu'un contenu informatif du premier flux de données (ED) est reconstruit, tout du moins en partie, en fonction de l'information transmise par le récepteur (EG2) à partir des paquets de données du premier flux de données (ED), reçus par le récepteur (EG2).

10. Procédé selon l'une quelconque des revendications précédentes,
**caractérisé en ce**
**que** des données quasi en temps réel (ED) sont transmises dans le premier flux de données.
